(19) Europäisches Patentamt
European Patent Office
Office européen des brevets

(11) Publication number: **0 117 044**
**A1**

# (12) EUROPEAN PATENT APPLICATION

(21) Application number: 84300209.8

(22) Date of filing: 13.01.84

(51) Int. Cl.$^3$: **A 23 L 1/10**
A 23 L 1/34

(30) Priority: 14.01.83 US 457994

(43) Date of publication of application: 29.08.84 Bulletin 84/35

(84) Designated Contracting States: AT BE CH DE FR GB IT LI LU NL SE

(71) Applicant: GENERAL FOODS CORPORATION
250 North Street
White Plains, N.Y. 10625(US)

(72) Inventor: Von Fulger, Charles
35 Hidden Hollow Lane
Millwood New York 10546(US)

(74) Representative: Baillie, Iain Cameron et al,
c/o Ladas & Parry Isartorplatz 5
D-8000 München 2(DE)

## (54) Micromilling of bran and product.

(57) The invention relates to a bran material of an average particle size of from 5 to 100 microns which possesses an increased functionality, improved texture-forming property and absence of grittiness as compared to commercially available bran when incorporated into a food product.

EP 0 117 044 A1

Croydon Printing Company Ltd.

Case 2980

DESCRIPTION

MICROMILLING OF BRAN AND PRODUCT

TECHNICAL FIELD

This invention relates to food products and more particularly to a process for producing a micro-milled bran and the product produced thereby.

BACKGROUND ART

Bran is a low-cost food grade material which has found its greatest utility as a cereal fiber source. Recently there has developed increasing interest among nutritionists and among consumers in high-fiber food products particularly in high-fiber ready-to-eat cereals. At the present time grain bran is the principal fiber fortifying ingredient which is relied upon to provide high-fiber content. In fiber-fortified food products, the presence of bran is highly desirous since it is an excellent source of natural fibers. Recent medical research indicates a diet rich in fiber is desirable and advantageous for the maintenance and a satisfactory functioning of the intestines. It is an important aid to regularity and may be helpful in adsorbing bile acids.

The conventional breakfast cereal processing technology generally uses bran with the particle size between 20 and 100 U.S. standard screen size (approximately 150 to 840 microns). When bran particles within this size range are added to food products, the food product acquires an undesirable gritty mouthfeel and a choking sensation due to the hard and abrasive fiber particles. The bran also interferes with the light, foamy texture development in certain food products. In most food applications, long, large strands of fiber alter the texture created by the other food components and interfere with the processing of food.

U.S. Patent No. 3,767,423 issued to Tsantir et. al teaches the production of a low-calorie bread containing a mixture of ground rice hulls and ground soy bean hulls. The particle size ranges from 5 to 160 microns, the preferable average diameter being 10 microns. U.S. Patent 3,573,061 issued to Glabe et. al. teaches the production of a low-calorie bread made from soybean seedcoat flour. This flour is characterized as having relatively low-water absorbency. U.S. Patent 3,348,951 issued to Evans teaches a process for preparing baked, starch-reduced dietetic products containing gluten and a starch replacement ingredient, one of which may be wheat bran. U.S. Patent 4,350,714 entitled Corn Bran Expanded Cereal teaches the production of a ready-to-eat expanded cereal product made in a cooker extruder which contains corn bran flour in an amount sufficient to provide at least a 1.5 percent fiber in the product, the corn bran flour having been ground to a fineness whereby 100% passes through a 40 mesh U.S sieve.

While the Tsantir reference discusses a mixture of ground rice and soy bean hulls of a small particle size, the prior art does not disclose the production of a functional bran flour which has a particle size under a 150 microns. The composition of the material disclosed by the prior art, namely the ground rice hulls and ground soy bean hulls disclosed by Tsantir et. al. and the soybean seedcoat flour disclosed by Glabe, differ from conventional bran.

A well-known reference on soybeans entitled "Soybeans and Soybean Products," edited by Klare S. Markley discusses the physical composition of a soybean seed in the first volume of the collection. (page 142). There it is stated that the dry seed of most varieties of the soybean seed have a thin seedcoat or hull. The soybean consists of approximately 6 to 8% hull or seedcoat and this segment was found to contain approximately on the order of 17 to 20% pectin, 5.6 to 10% hemicellulose, 51.9% crude fiber, 11.7% alpha-cellulose, 0.9% crude fat, and 4.3% ash, expressed on a dry weight basis. The reference uses the terms hull and seed coat interchangeably thereby leading one to believe that they are one in the same.

The rice hull or husk which is disclosed by Tsantir is composed of two modified leaves called the Palea and the larger Lemma. Removal of the husk or hull material from the rough rice yields the kernel. The husks, due to their high silica content protect the kernel of the rice from insects and fungal damage. The kernel which is exposed after the husk is removed is known as the brown rice or as unpolished rice. Brown rice is in little demand as a food but milling of brown rice to remove the bran (which is composed of the pericarp, seedcoat, nucellus and aleurone) and germ yields white rice or polished rice a widely used product. Large amounts of rice husks are removed during milling. The abrasive husk contain about 15% silica, have a poor nutritional value, are difficult to degrade, and have a low-bulk density. Rice bran on the other hand is about from 5 to 7% by weight of the brown rice.

The term bran is used in the trade to describe a mixture of several botanical tissues: pericarp (fruit coat), seedcoat (the pericarp and seedcoat are highly adherent at maturity), nucellus, and the outermost portion of the endosperm, the aleurone layer. Bran does not contain the same compositional makeup as rice hull (or husk) nor is it similar to soybean seedcoats. A sample of typical dry milled Illinois yellow corn bran contains on analysis 48.4% hemicellulose, 14.4 cellulose, 0.74% lignin, and 6.7% protein. Additionally, this sample contained 17.5% starch which is attributable to the presence of some of the endosperm fraction. The seed hulls, which are the loose shells surrounding the seeds are generally friable in nature and are ground readily by conventional mills. Brans, on the other hand, are the first outer integral layers of the seeds and are tough, tightly organized, flexible layers which have not been successfully ground to under 150 micron particle size and consequently have not been utilized in food products at that particle size range. Its compositional makeup accounts for the difficulty encountered in attempting to fine grind it to a particle size less than 150 microns.

It is an object of the present invention to improve the functionality of bran and overcome objections which have hindered the full utilization of this nutritionally desirous material in foodstuffs.

DISCLOSURE OF THE INVENTION

The invention relates to a functional bran material of an average particle size of from 5 to 100 microns. The bran particles within this particle size range will possess an increased functionality and an improved texture forming property. This has been verified in that the bran of the present invention will achieve an increase in Farinograph reading of from 50 to 500 Brabender Units as compared to commercially available bran of a particle size range of from 150 to 840 microns when mixed with the appropriate amount of water.

BRIEF DESCRIPTION OF DRAWINGS

Figures 1 through 4 represent Farinograph Studies of various particle sizes of wet milled corn bran, dry milled corn bran, heavy wheat bran and light wheat bran. Further discussion is provided in Example 2.

Figures 5 through 8 represent graphs of the change in mixing torque with change in mixing speed of various milled bran materials using a Rheocord Torque Viscometer. The procedure and results are outlined in Example 3.

Figures 9 through 29 are pictures taken of bread samples which have incorporated therein various bran materials of certain average particle sizes. This is explained in Example 4.

BEST MODE FOR CARRYING OUT THE INVENTION

The bran product of this invention is prepared by feeding commercially available bran into a micromilling apparatus preferably an impact mill. (Micromilling, as referred to in this application, shall refer to the production of an average bran particle under 100 microns in size, a particle size unattainable by most commercially available mills.) An impact mill manufactured by Vortec Products Company, (Long Beach, CA), will grind material to a selected size range varying from a maximum particle size of 1/8" in diameter to a particle size of subsieve size less than 5 microns. Material that is poured into the feed tunnel in this unit will proceed to the center of the rotor where it is propelled outward from the rotor channels. The controlled air flow, produced by the rotor and the centrifugal force, carries the material outward. In travelling outward the material is accelerated tangentially and radially to reach maximum velocity at the rotor rim. Here the material leaves the rotor at an angle determined by the combined tangential and radial velocity components and is thrust against an impact block where the material is shattered along its natural structure lines. Preferably the shattered material is carried by the air flow to the scroll area of the mill for a discharge to a cyclone and connecting container or air classifier. The air flow functions both to carry the material out of the unit and also cool the equipment and the product which is being milled. Preferably the impact mill is combined with an air classifier which can produce narrow particle size fractions.

The bran material of the present invention may be either wheat, corn, barley, rye or oat. Additionally, combinations of different bran materials may be combined together. The preferred bran materials are corn or wheat.

A process for improving the functionality and mouthfeel of bran is also disclosed which comprises milling bran to produce particles of bran of an average particle size of from 5 to 100 microns, preferably from 20 to 60 microns. The preferable apparatus to accomplish this milling is an impact mill, preferably an impact mill combined with an air classifier.

The increased functionality achieved by the micromilled bran of the present invention can best be illustrated by the use of Farinography. (Actual measurements and methodologies are discussed in the examples that follow). Wet milled corn bran which was micromilled to average particle size of from 5 to 100 microns achieved a maximum Farinograph reading of from approximately 300 to 450 Brabender Units. In a similar manner dry milled corn bran, light wheat bran and heavy wheat bran when micromilled to the previously mentioned particle size range achieved maximum Farinograph reading of from approximately 150 to 400, 550 to 850 and 450 to 900 Brabender Units respectedly. In all cases, these reading represent an increase of from 50 to 500 Brabender Units over readings obtained with commercially available brans (derived from the same source) of a particle size range of from 150 to 840 microns. At the preferred average particle size range (of from 20 to 60 microns) the difference in Farinograph readings will be from 200 to 500.

In certain food products, the increased functionality of the micromilled bran of the present invention is very significant. By utilizing the micromilled bran, in addition to fortifying the foodstuff with fiber, it is also possible to replace starch with a calorie diluting ingredient which also contributes a functionality of its own to the system. Commercially available bran can be used both to dilute calories and fiber-fortify the food system, but is limited because it does not contribute sufficient functionality thus the finished food product will suffer accordingly.

The micromilled bran of the present invention can be incorporated into food products at a level of from 1 to 100 by weight. Examples of said food products include expanded cereal products, cereal flakes, bread and bakery products, whole grain malt ingredients, fiber fortified pasta products, fabricated food products such as sausages and meat analogs, confectionary products and pet foods. The micromilled bran could also be utilized as a pharmaceutical diet aid.

This invention is further illustrated but not limited by the following examples.

EXAMPLE 1

Micromilled bran particles of an average particle size of 40 microns were produced using a combination of a Model M-1 Mill and C-1 Air Classifier manufactured by Vortec Products Company (Long Beach, CA) in a closed loop grinding system.

C-1 Air Classifier:

| | |
|---|---|
| Internal: | Zone Height 0.210 inches, 3rd rotor stage diameter: 18:00 in. |
| Operating Speed: | 3550 RPM |
| Throttle Position: | 20% |
| Oversize Fraction: | Direct Return to Mill.(no coarse cyclones) |
| Fine Fraction: | Airtight discharge into drum |
| Vent Air, Fine Cyclone: | To Dustcollector (no material recovered) |
| Elevation of Air Classifier Over Mill: | Base to base 30 inches |

M-1 Impact Mill:

| | |
|---|---|
| Internal: | Highspeed rotor, tungsten carbide coated impact ring assembly. The distance from the rotor to the nearest impact block was 5/16 of inch with there being 36 blocks in the total assembly. |
| Operating Speed: | 20,000 RPM |
| Feedermachine: | Vibratory Screwfeeder |
| Discharge: | Through 1 1/2 inch pipe to cyclone above classifier |
| Vent Air: | Into common dustcollector (no material recovered) |

The average process rate for the equipment was between 35-45 lbs/hr depending on feedstock source, particle size of feedstock, atmospheric conditions (humidity) during milling operation, moisture content and chemical component variation of feedstock. In some cases, the rotor was cooled by feeding liquid nitrogen with the feedstock. This has an influence on the production rate of certain brans without overheating the equipment or the product. The milled product temperature was always maintained below 120°F.

EXAMPLE 2

A study was undertaken in order to substantiate measurable functional differences between the micromilled brans of the present invention and industrially milled brans. Four materials were chosen for detailed study. They were: wet milled corn bran (WC), dry milled corn bran (DC), light wheat bran (LW) and heavy wheat bran (HW). The wheat brans (LW & HW) were obtained from Star of the West Milling Co. of Frankenmuth, MI; the wet corn bran (WC) from A. E. Staley Mfg. Co., Decatur, IL; and the dry corn bran (DC) from R. J. Short Co., Kankakee, IL. Each of the four starting materials was obtained or reduced to an average particle size ranging from 300-600 microns by passing through a conventional Homoloid Fitzmill having a 30 mesh screen. Each material was also reduced in size by micromilling in a M-1 Vortec Mill equipped with a $C_1$ air classifier. Four different Vortec Mill throttle (T) settings were used to produce samples having average particle sizes (estimated by photomicrography) as reported in Table I. To determine whether fractionation had occurred during the micromilling, the samples were analyzed for protein (total nitrogen) and starch content. The compositional differences between the samples were not considered to be significant.

A Brabender Farinograph was used to quantify the consistency and texture-forming properties of the various bran samples. The Brabender Farinograph measures the resistance of the sample to mixing at a constant speed as a function of water addition. Farinograph curves were obtained using a type $A_2$ Brabender Farinograph (W. Hackensack, N.J.). The high speed mixing mode was used. The mixing chamber was kept at 30°C during the whole mixing procedure. During a typical run, 125g of milled sample was charged in the mixing chamber and equilibrated by mixing for 5 minutes to obtain the 0 time reading. Six to ten 25 ml aliquots of distilled water (equivalent to 120 to 200% of the dry powder) were then added to the sample. After each addition the sample was mixed until a steady, horizontal reading was indicated by the recorder (usually 5-10) minutes). The readings rose from zero (with the dry powder) to a maximum (at about 100% added water) and decreased stepwise with additional water increments. The titration was stopped when the mixture in the bowl became a fluid, slurry mass (a reading of about 50). The Farinograph readings appear, not as a single line, but as a range of work energy values needed for mixing. It is the average of this range that is plotted in the four graphs included (Figures 1, 2, 3 and 4). In Table I, the average maximum achieved by each sample is recorded.

It is clear from reading the results that appear in Table I and from analyzing the graphs, that as the particle size decreases there is an increased amount of mixing work required. This increased tendency to dough formation, as exhibited by higher Farinograph readings, correlates to a significant improvement in functionality. The graphs show that a limited amount of functionality can be gained by milling down to 100-150 microns. This functionality is appreciably enhanced at a particle size of about 80 microns and greatly increased at a particle range of 20-40 microns. Although true of the corn bran samples, these functionality changes are even more apparent in the wheat bran farinograph curves where the presence of residual, highly functional gluten results in higher overall values throughout the whole mixing range.

Also observed in Table I, as the particle size decreases, there is a corresponding drop in dry bulk density as the surface area of the sample increases.

TABLE 1

| Sample Description | | Average Particle Size (in microns) | Farinograph Readings[b] (Maximum) | Dry Bulk Density (g/cc) |
|---|---|---|---|---|
| Wet corn | Commercially Available | 250 | 250 | 0.46 |
| " " | 90T[a] | 145 | 185 | 0.55 |
| " " | 50T | 85 | 305 | 0.48 |
| " " | 25T | 40 | 440 | 0.42 |
| " " | 15T | 25 | 430 | 0.40 |
| Dry corn | 100% Through -30 Mesh | 600 | 25 | 0.61 |
| " " | 95T | 110 | 90 | 0.63 |
| " " | 50T | 60 | 190 | 0.56 |
| " " | 25T | 44 | 280 | 0.52 |
| " " | 15T | 18 | 340 | 0.49 |
| Heavy Wheat | 100% through -30 Mesh | 350 | 385 | 0.74 |
| " " | 95T | 120 | 410 | 0.64 |
| " " | 50T | 75 | 465 | 0.66 |
| " " | 25T | 44 | 660 | 0.60 |
| " " | 15T | 20 | ≅900 | 0.58 |
| Light Wheat | 100% through -30 Mesh | 500 | 440 | 0.50 |
| " " | 95T | 230 | 500 | 0.45 |
| " " | 50T | 62 | 550 | 0.48 |
| " " | 25T | 35 | 700 | 0.46 |
| " " | 15T | 22 | ≅750 | 0.45 |
| " " | 5T | - | ≅850 | 0.42 |

a. "T" = throttle setting on the Vortec Mill

b. Corn samples - 100 g; wheat samples = 125 g

EXAMPLE 3

To provide additional evidence of the effect of micromilling on the functional properties of corn and wheat brans, a Rheocord Torque Viscometer (RTR) was utilized to measure the amount of work (torque) needed to mix a powdered material with water. Unlike the Farinograph, the RTR has a variable speed drive and can measure the amount of torque at different mixing speeds (r.p.m.). Specifically, a Type M RTR (Haake, Inc., Saddel Brook, NJ) measured the amount of work (in meter-gram) needed to mix a specific sample at various mixing speeds (rpm). The various samples were pre-mixed, in a sigma-type mixer, with a pre-determined amount of water (100-180% of the bran weight). The level chosen was intended to thoroughly wet and hydrate the sample up to a point where no water separation occurred on standing. The hydrated samples were allowed to stand at 5°C for a period of about 24 hours before being tested. During the testing 100g of wet bran slurry was packed in the RTR. It was mixed at 100 rpm until a steady reading was recorded (about 10 minutes). The mixing speed was decreased stepwise by 10 rpms until the mixing torque over the whole range (10-100) had been recorded.

As seen in Figures 5 and 6, commercially available corn brans of a particle size of 200 microns or greater showed little or no change in mixing torque with change in mixing speed. In these graphs as well as those represented in Figures 7 and 8 (shown for wheat brans) the percentage change from the zero torque reading (an extrapolated value) was plotted versus mixing speed. As the particle size decreases, an increasing amount of work is needed to mix the sample at increasing speeds. Figures 7 and 8 illustrate the mixing speed-work dependency difference between micromilled and commercial wheat brans and show that the effect is not quite so marked as compared with results obtained using corn bran. As the last two graphs show, the commercial materials also exhibit a positive mixing speed dependence. It is suspected that this is due to the presence of the highly functional wheat gluten present in the samples. Also in these two instances, however, the curves for the micromilled samples lie well above (have a greater slope) those of the commercial ones, indicating a substantial increase in functionality due to micromilling. The work described about as well as composition data for both the corn and wheat bran, is summarized in Table II.

TABLE II

| Sample Code | Particle Size (microns) | Torque Rheometer Data[a] (% Change in Torque at 50 rpm[b]) |
|---|---|---|
| WC - Commercially Available | 250 | 0 |
| WC 25T | 40 | 33 |
| DC - Commercially Available | 600 | nil |
| DC 95T | 110 | 31 |
| DC 50T | 60 | 32 |
| DC 25T | 44 | 38 |
| DC 15T | 18 | 53 |
| LW Commercially Available | 500 | 35 |
| LW 15T | 22 | 71 |
| HW Commercially Available | 350 | 71 |
| HW 15T | 20 | 180 |

a - Torque Value = 100 $\pm$ 10 m-g

b - % Change in Torque=[Torque - Torque at 0 rpn (extrapolated value) x 100]

EXAMPLE 4

As an example of the increased functionality the micromilled bran will exhibit in a food system, bran containing breads were baked containing identical levels of the following brans: wet milled corn bran, dry milled corn bran, heavy wheat bran and light wheat bran. The only variable among the samples was the particle size of the bran which was incorporated. All bran breads that were produced had the compositional makeup (pre-baked) as reported in Table III.

TABLE III

| Ingredient | Weight (grams) |
|---|---|
| Wheat Gluten | 50 |
| Bran | 50 |
| Shortening | 6 |
| Sugar | 4 |
| Sodium Caseinate | 3 |
| Salt | 2 |
| Baking Powder | 2 |
| Yeast (active, dry) | 2 |
| Guar Gum | 1 |
| Sodium Stearoyl Lactylate | 1 |
| Water | 120 |

The ingredients as shown in Table III, minus the water, yeast and shortening, were dry-blended for 5 minutes in a Hobart mixer after which the melted shortening and 104°F water were added with additional (1 min.) mixing. At this point the yeast was introduced and the whole mass was mixed at speed #2 for 10 minutes. The dough was allowed to stand for 45 min. prior to being hand-formed (200g loaves) and placed in pint sized greased pans. The dough was allowed to rise until it was from one to one and one-half inches above the top of the pan at which time it was baked in a pre-heated oven at 350°F for 15-20 minutes. The loaves were allowed to cool.

The loaf volumes were measured and the samples were cut in half and evaluated for taste and appearance. Obvious differences in appearance (texture) were observed. Figures 9 through 29 are pictures taken of the bread samples which are referenced in the upper lefthand corner of each picture with the particle size of the bran incorporated. A metric ruler appears in each picture to provide a magnitude reference. Figures 9, 10, 11, 12 and 29 are pictures taken of breads containing wet milled corn bran, Figures 13, 14, 15, 16 and 28 are pictures taken of breads containing heavy wheat bran, Figures 17, 18, 19, 20 and 27 are pictures taken of breads containing dry milled corn bran, and Figures 21, 22, 23, 24, 25 and 26 are pictures taken of breads containing light wheat bran. Little change in baked loaf volume between the commercial and micromilled samples could be discerned. As the pictures show, the change in texture was significant. The original, commercial bran bread had a coarser, "stringy" or fibrous appearance. With decreasing particle size, the bread attained a more even and "bread-like" texture. The holes became smaller and rounder. In the case of heavy wheat bran, the change is less pronounced, perhaps due to the higher level of starch in the sample (>60%). The beneficial effects of micromilling appear to be gradual, but they reach a maximum in the 20-50 micron particle size range.

CLAIMS

1. An improved functional bran material of an average particle size of from 5 to 100 microns.

2. The product of claim 1 wherein the bran material is selected from the group consisting of wheat, corn, barley, rye, oat, and combinations thereof.

3. The product of claim 2 wherein the average particle size is from 20 to 60 microns.

4. The product of claims 1 or 2 wherein said improved functionality is such that said bran particles achieve an increase in Farinograph reading of from approximately 50 to 500 Brabender Units as compared to commercially available bran of a particle size of from 150 to 840 microns.

5. The product of Claim 3 wherein said improved functionality is such that said bran particles achieve an increase in Farinograph reading of from approximately 200 to 500 Brabender Units as compared to commercially available bran of a particle size of from 150 to 840 microns.

6. A process for improving the functionality and mouthfeel of bran which comprises milling bran to produce bran paticles of an average particle size of from 5 to 100 microns.

7. The process of claim 6 wherein the bran particles are of an average particle size of from 20 to 60 microns.

8. The process of claim 6 wherein an impact mill is used to mill the bran.

9. The process of claim 8 wherein said impact mill is combined with an air classifier.

10. The process of claim 6 wherein the bran is selected from the group consisting of wheat, corn, barley, rye, oat and combinations thereof.

11. The process of claims 6, 8, 9 or 10 wherein said improved functionality is such that said bran particles achieve an increase in Farinograph reading of from appriximately 50 to 500 Brabender Units as compared to commercially available bran of a particle size range of from 150 to 840 microns.

12. The process of Claim 7 wherein said improved functionality is such that said bran particles achieve an increase in Farinograph reading of from approximately 200 to 500 Brabender Units as compared to commercially available bran of a particle size range of from 150 to 840 microns.

13. A food product having added thereto from 1 to 100% by weight of bran of a particle size of from 5 to 100 microns.

TAM/fiC32c

CLAIMS:

1. A process for improving the functionality and mouthfeel of bran which comprises milling bran to produce bran particles of an average particle size of from 5 to 100 microns.

2. A process according to claim 1 wherein the bran particles are of an average particle size of from 20 to 60 microns.

3. A process according to either of claims 1 and 2 wherein an impact mill is used to mill the bran.

4. A process according to claim 3 wherein said impact mill is combined with an air classifier.

5. A process according to any one of claims 1 to 4 wherein the bran is selected from wheat, corn, barley, rye, oat and combinations thereof.

6. A process according to any one of claims 1 to 5 wherein said improved functionality is such that said bran particles achieve an increase in Farinograph reading of from approximately 50 to 500 Brabender Units as compared to commercially available bran of a particle size range of from 150 to 840 microns.

7. A process according to claim 7 wherein said improved functionality is such that said bran particles achieve an increase in Farinograph reading of from approximately 200 to 500 Brabender Units as compared to commercially available bran of a particle size range of from 150 to 840 microns.

8. A process according to any one of claims 1 to 7 in which the bran is added to a food product in at least 1% by weight.

FIG.1

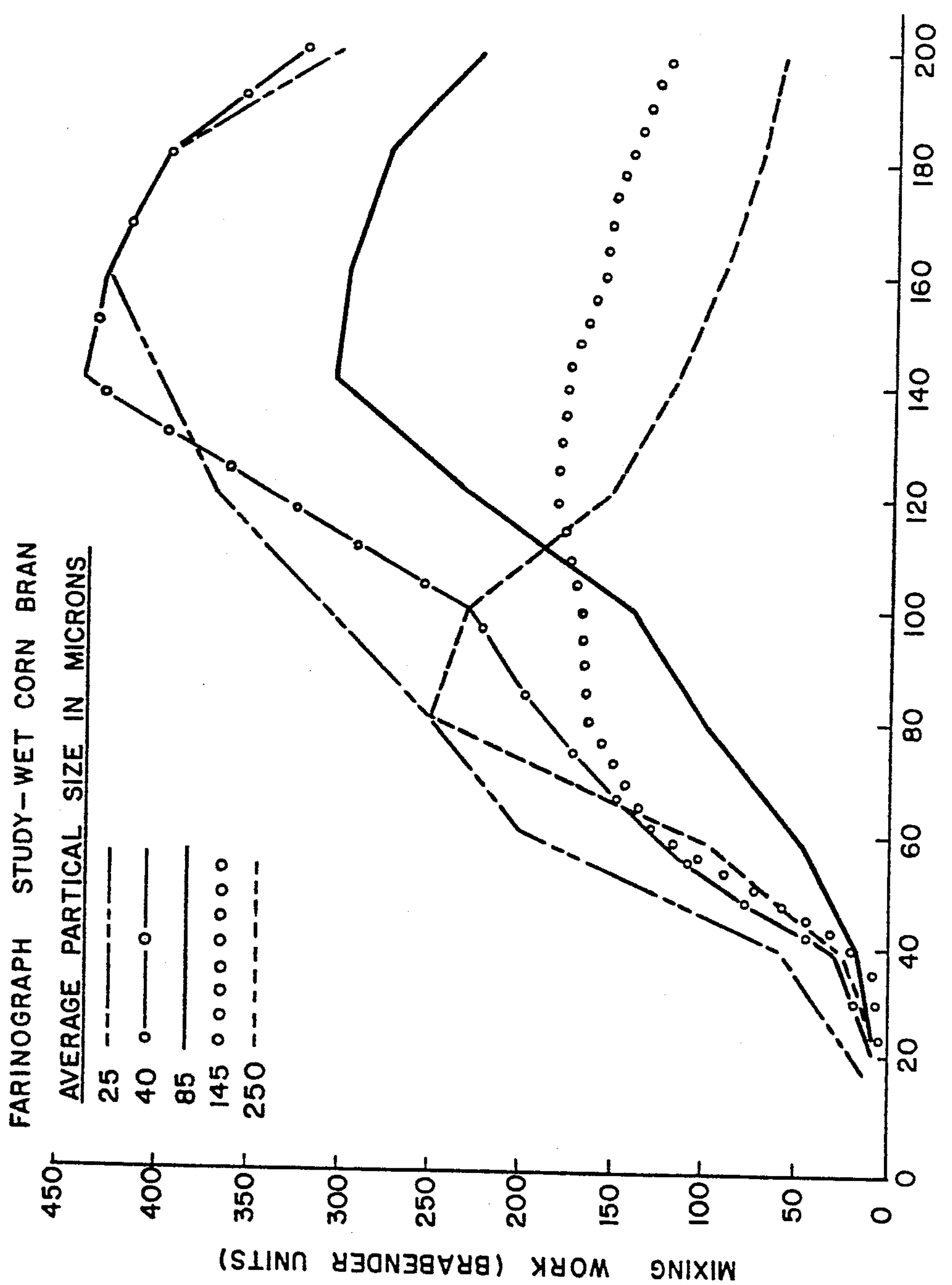

FARINOGRAPH STUDY-WET CORN BRAN
AVERAGE PARTICAL SIZE IN MICRONS
25
40
85
145
250
MIXING WORK (BRABENDER UNITS)
% WATER ADDED
0
50
100
150
200
250
300
350
400
450
20
40
60
80
100
120
140
160
180
200

FIG.2

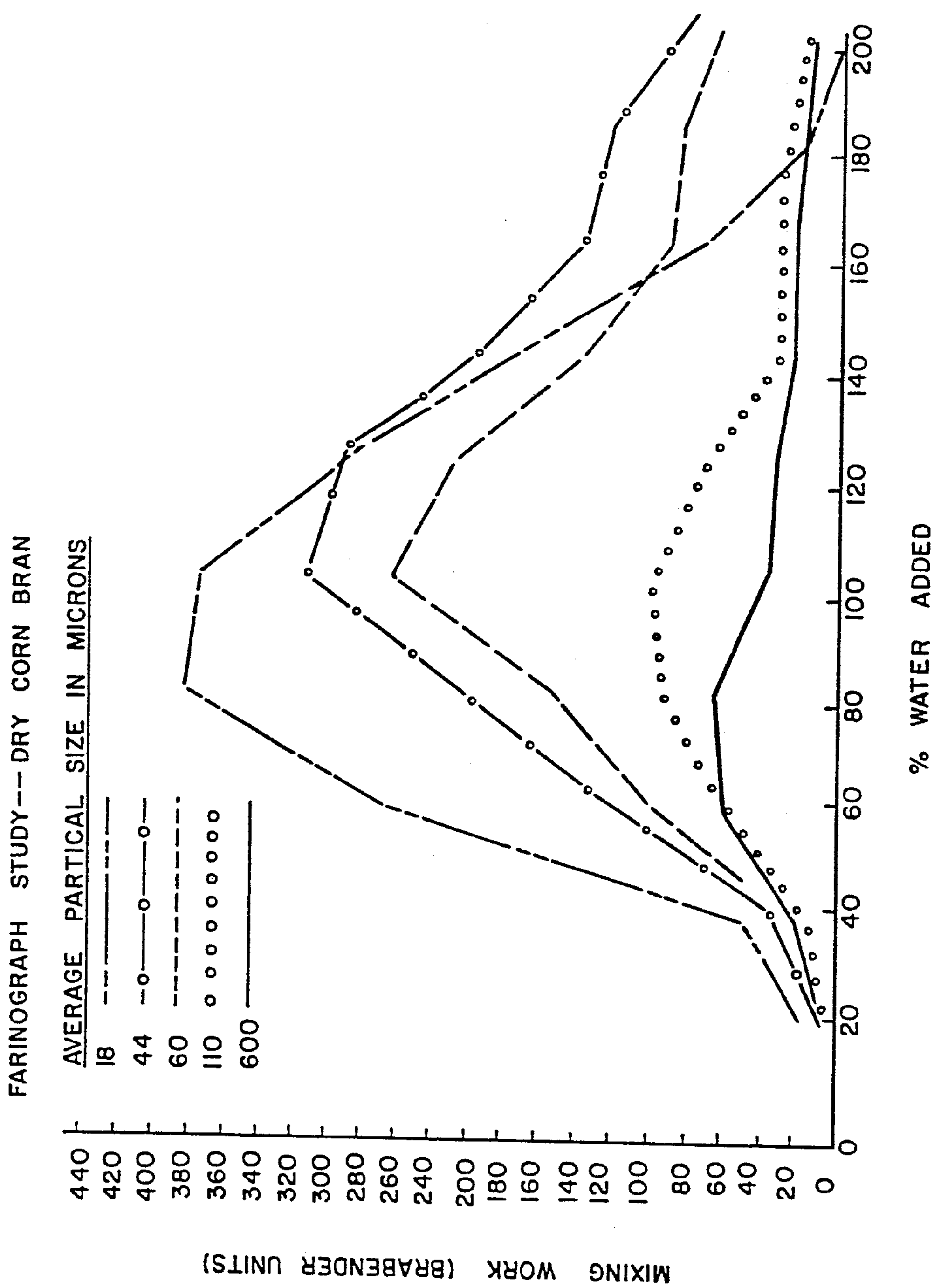
FARINOGRAPH STUDY— DRY CORN BRAN
AVERAGE PARTICAL SIZE IN MICRONS
18
44
60
110
600
MIXING WORK (BRABENDER UNITS)
440
420
400
380
360
340
320
300
280
260
240
200
180
160
140
120
100
80
60
40
20
0
0
20
40
60
80
100
120
140
160
180
200
% WATER ADDED

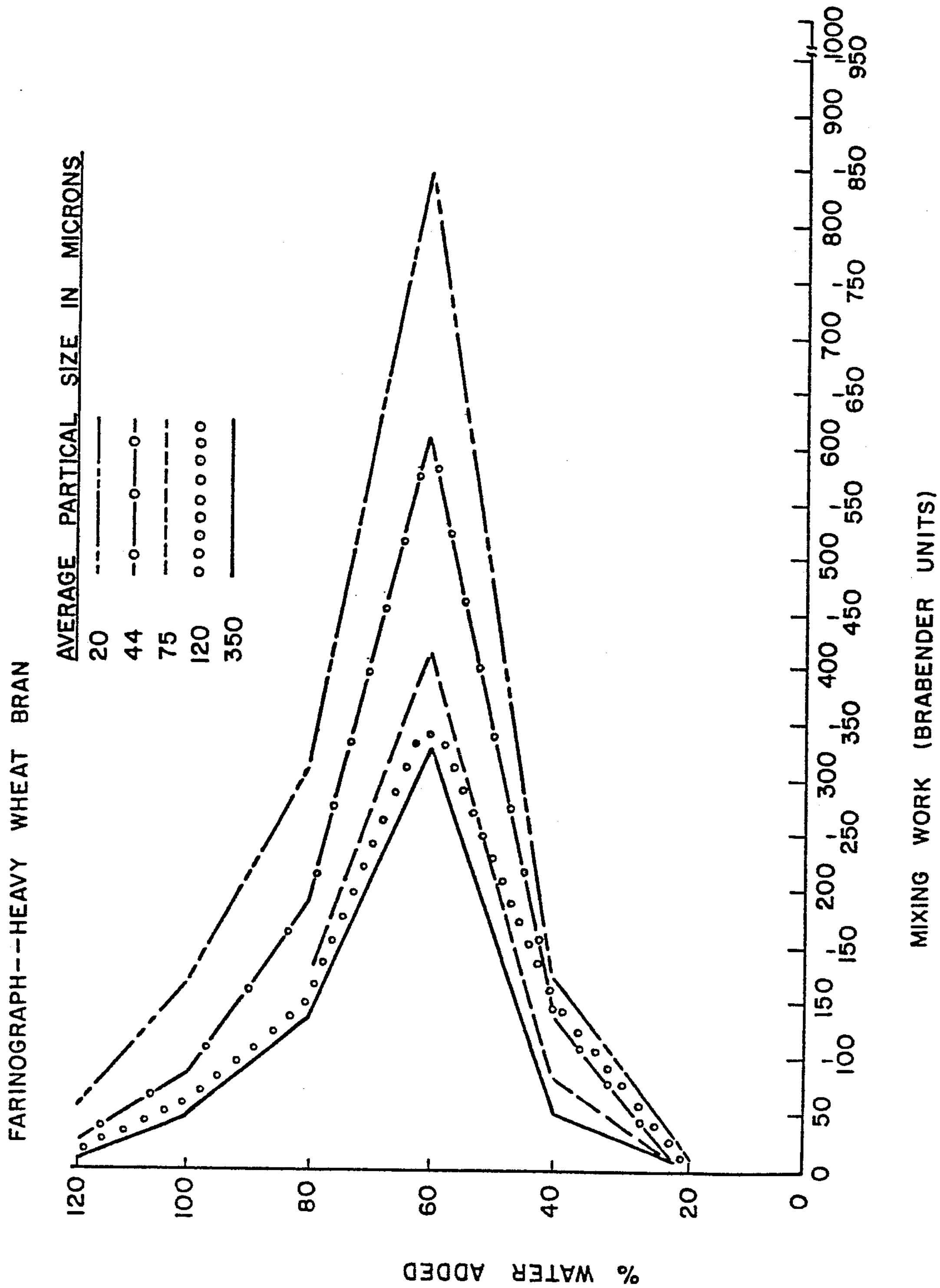
FARINOGRAPH--HEAVY WHEAT BRAN
AVERAGE PARTICAL SIZE IN MICRONS
20
44
75
120
350
% WATER ADDED
0
20
40
60
80
100
120
MIXING WORK (BRABENDER UNITS)
0
50
100
150
150
200
250
300
350
400
450
500
550
600
650
700
750
800
850
900
950
1000

FIG.3

FIG.4

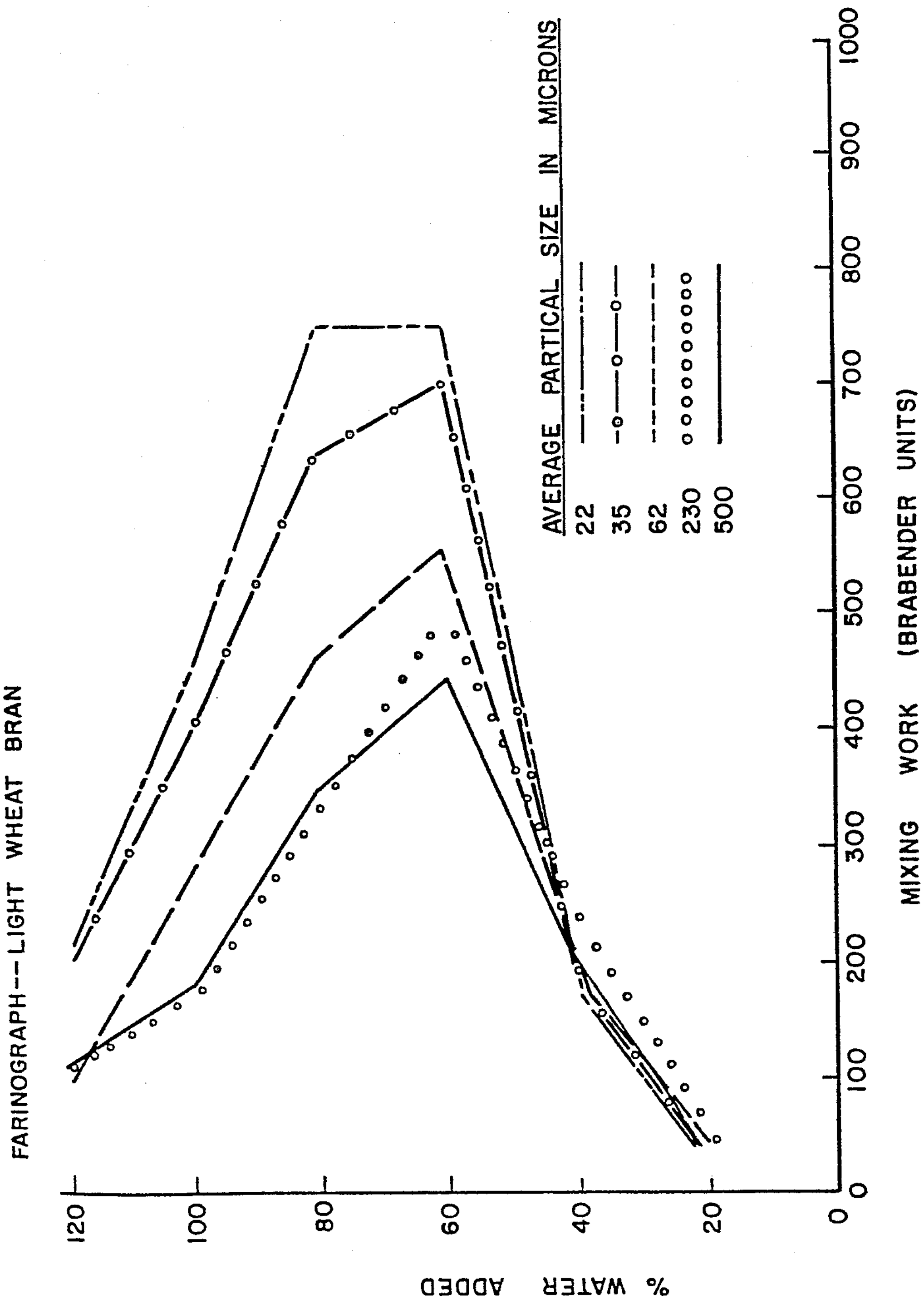
FARINOGRAPH--LIGHT WHEAT BRAN
AVERAGE PARTICAL SIZE IN MICRONS
22
35
62
230
500
% WATER ADDED
120
100
80
60
40
20
0
MIXING WORK (BRABENDER UNITS)
0
100
200
300
400
500
600
700
800
900
1000

FIG.5

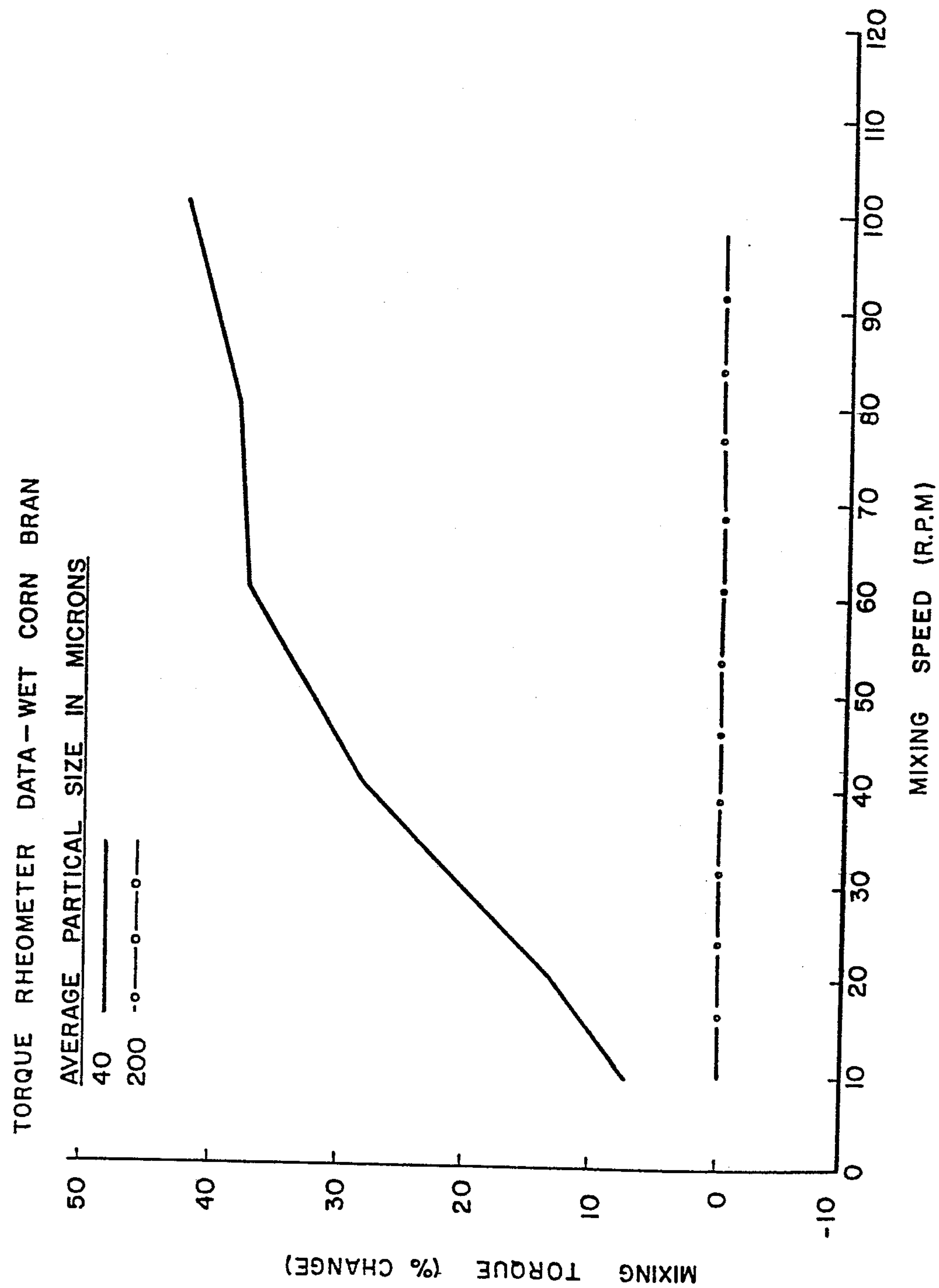
TORQUE RHEOMETER DATA-WET CORN BRAN
AVERAGE PARTICAL SIZE IN MICRONS
40
200
MIXING TORQUE (% CHANGE)
50
40
30
20
10
0
-10
MIXING SPEED (R.P.M)
0
10
20
30
40
50
60
70
80
90
100
110
120

FIG.6

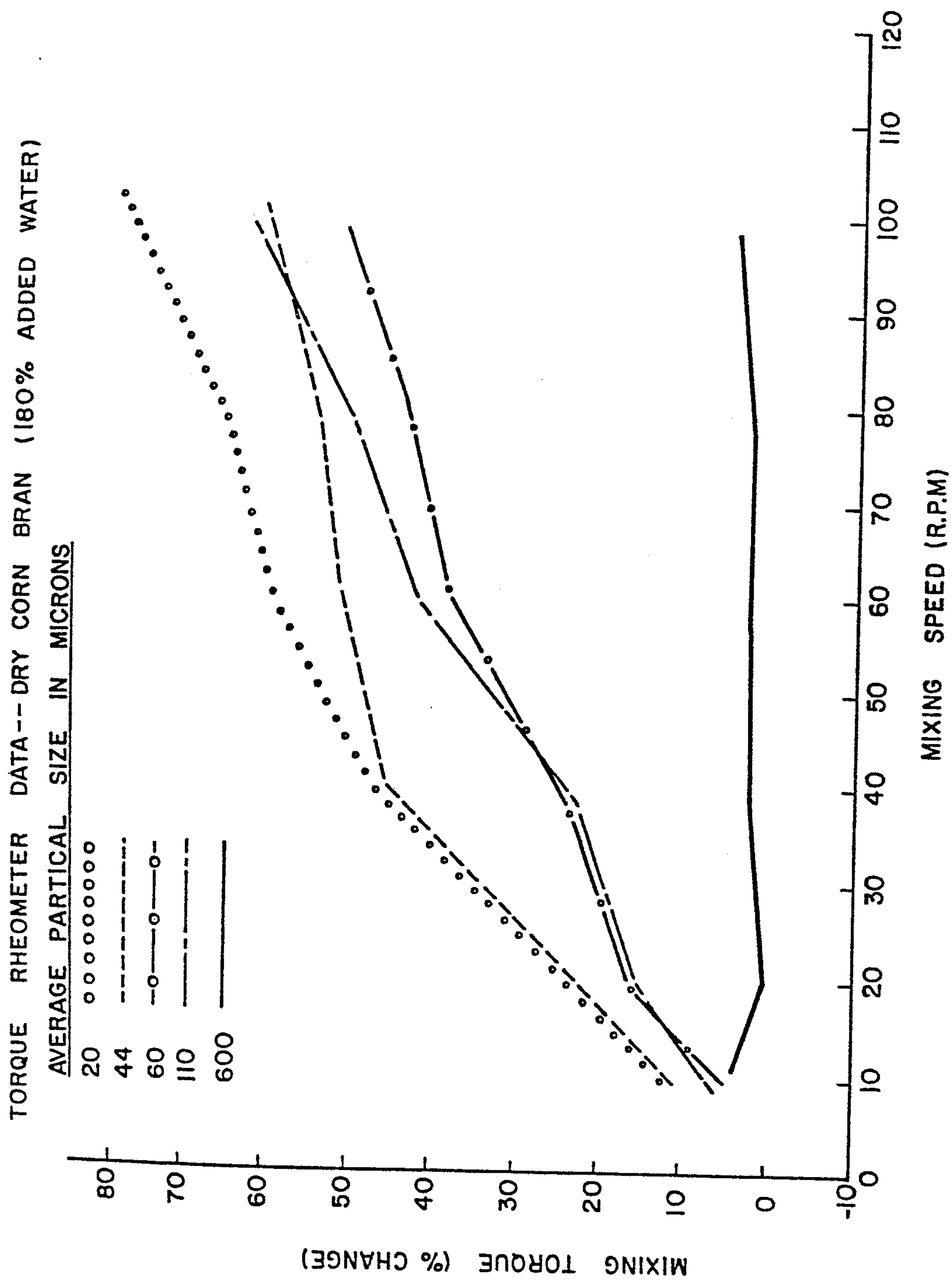
TORQUE RHEOMETER DATA--DRY CORN BRAN (180% ADDED WATER)
AVERAGE PARTICAL SIZE IN MICRONS
20
44
60
110
600
MIXING TORQUE (% CHANGE)
MIXING SPEED (R.P.M)
80
70
60
50
40
30
20
10
0
-10
0
10
20
30
40
50
60
70
80
90
100
110
120

FIG.7

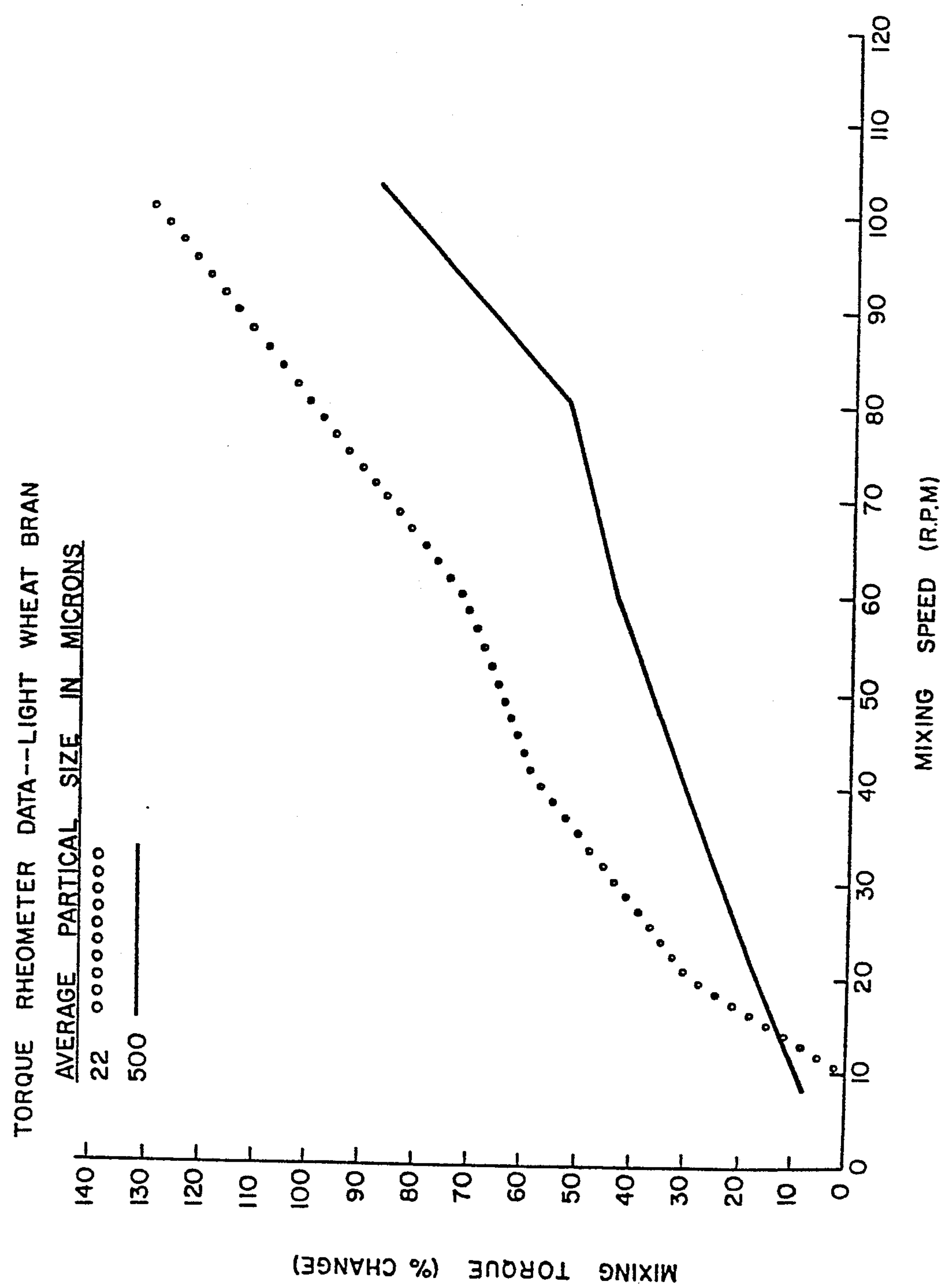
TORQUE RHEOMETER DATA--LIGHT WHEAT BRAN
AVERAGE PARTICAL SIZE IN MICRONS
22 ooooooooooo
500
MIXING TORQUE (% CHANGE)
0
10
20
30
40
50
60
70
80
90
100
110
120
130
140
MIXING SPEED (R.P.M)
0
10
20
30
40
50
60
70
80
90
100
110
120

FIG.8

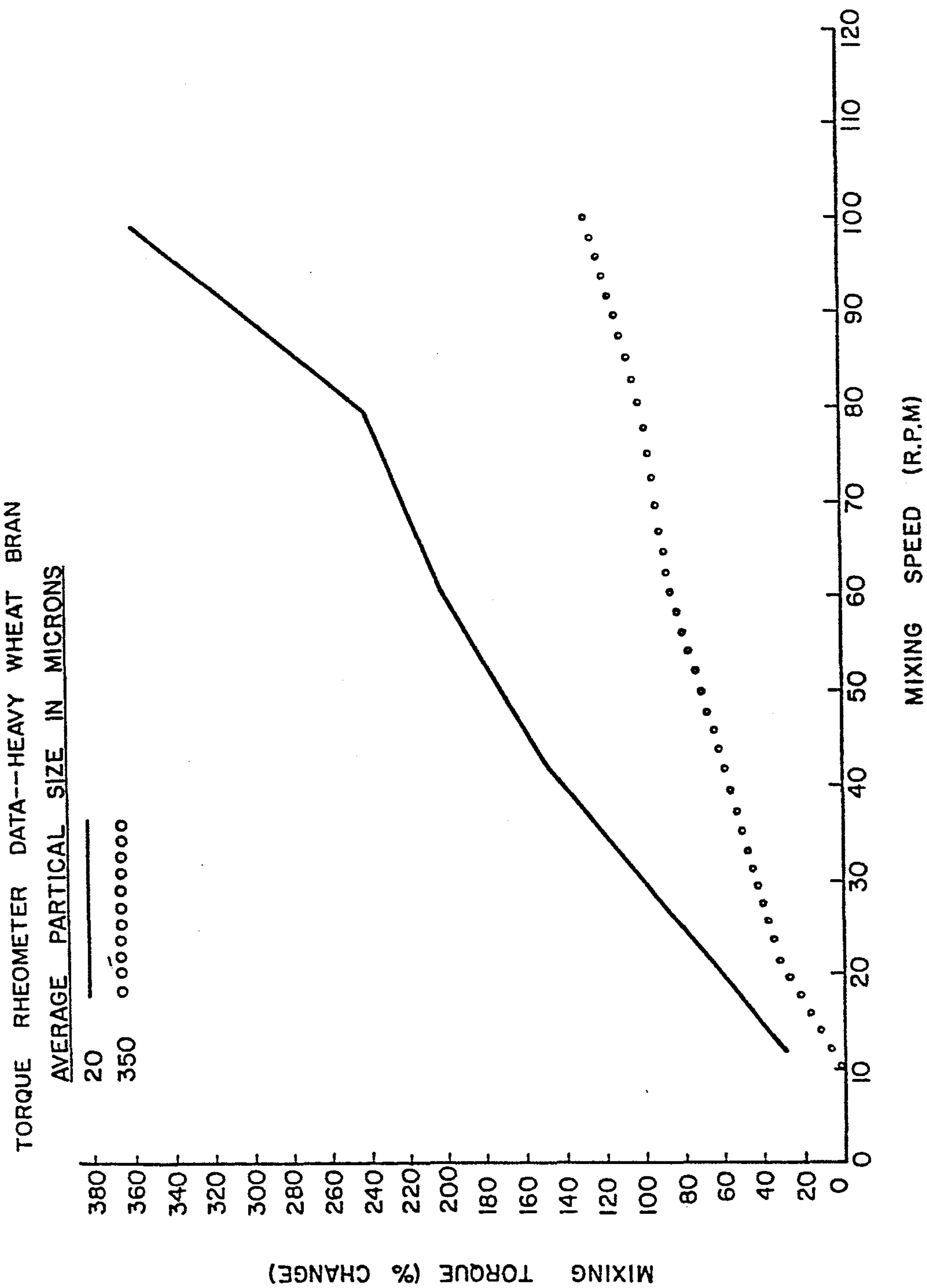
TORQUE RHEOMETER DATA--HEAVY WHEAT BRAN
AVERAGE PARTICAL SIZE IN MICRONS
20
350
MIXING TORQUE (% CHANGE)
0 20 40 60 80 100 120 140 160 180 200 220 240 260 280 300 320 340 360 380
MIXING SPEED (R.P.M)
0 10 20 30 40 50 60 70 80 90 100 110 120

WET CORN BRAN

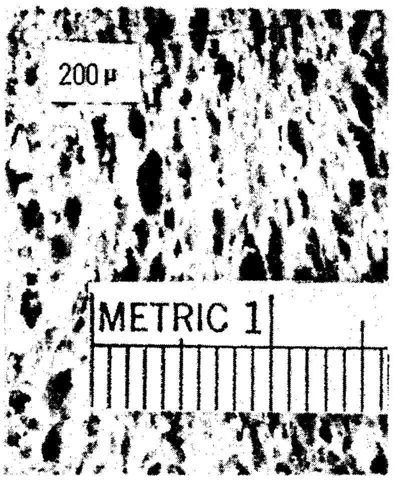


FIG.9

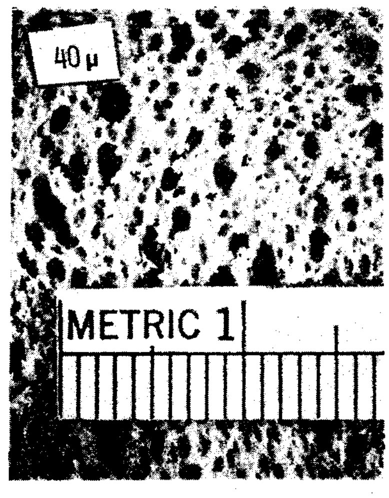


FIG.10

FIG.11

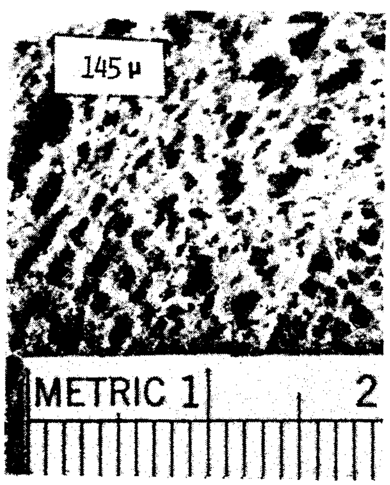


FIG.12

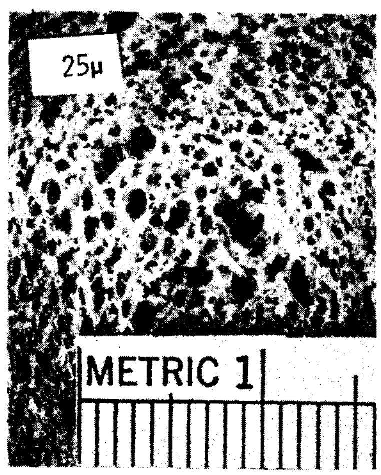

HEAVY WHEAT BRAN

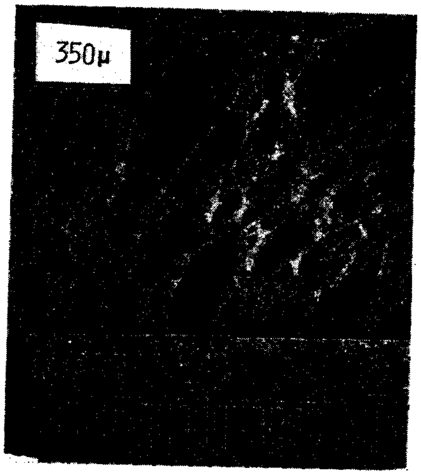


FIG.13

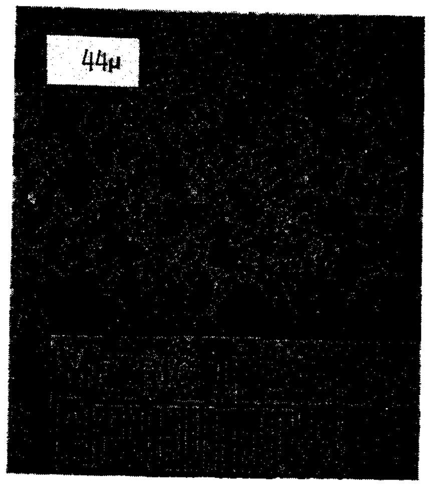


FIG.14

FIG.15

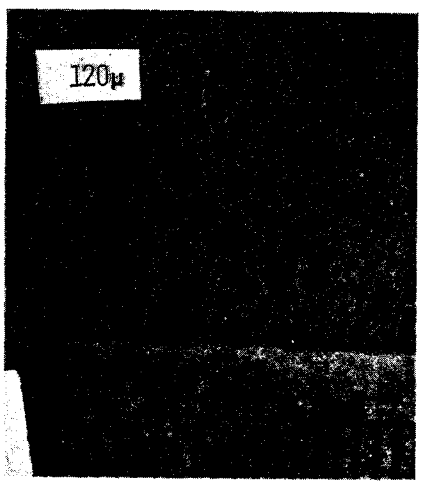


FIG.16

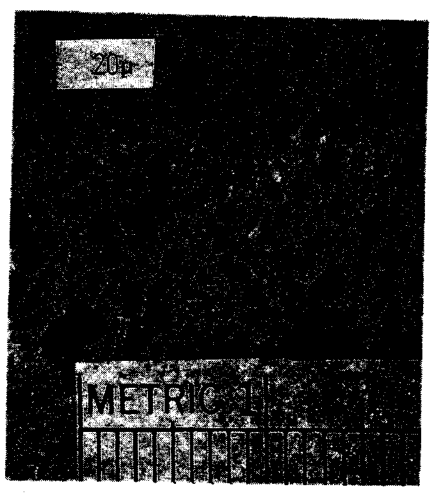

DRY CORN BRAN

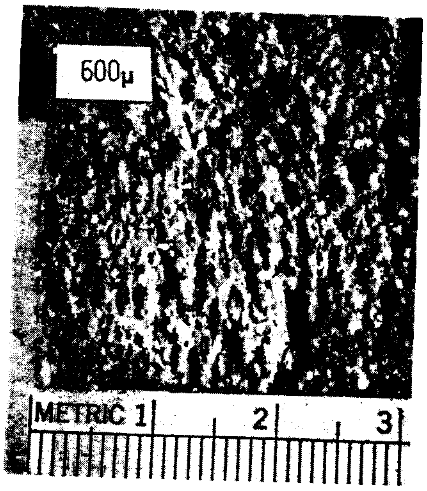


FIG.17

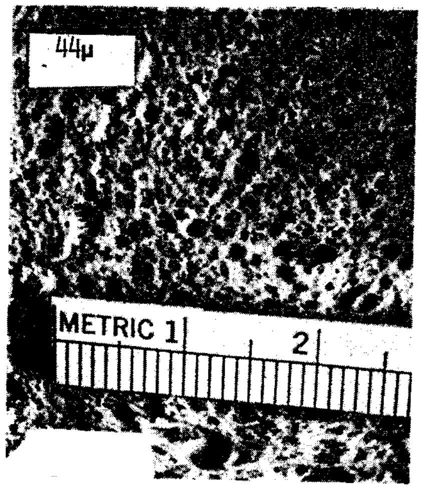


FIG.18

FIG.19

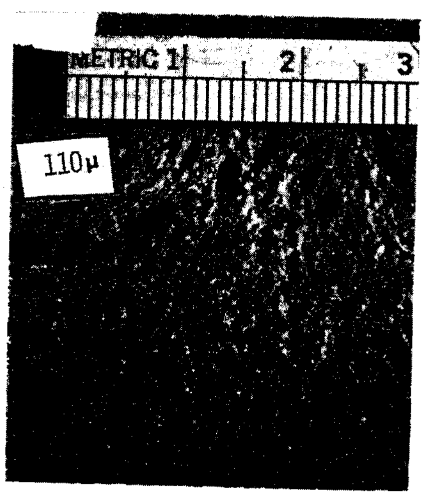


FIG.20

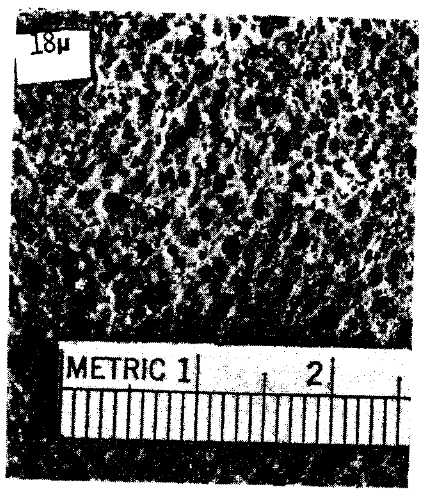

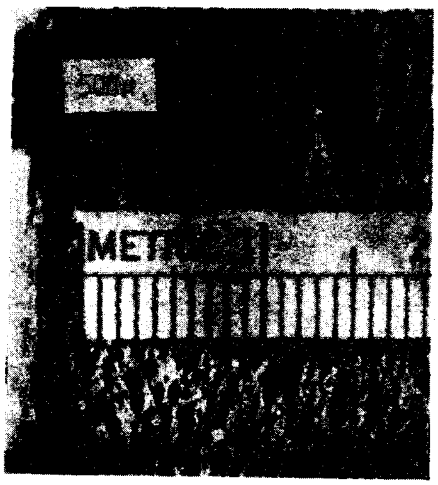

FIG.21

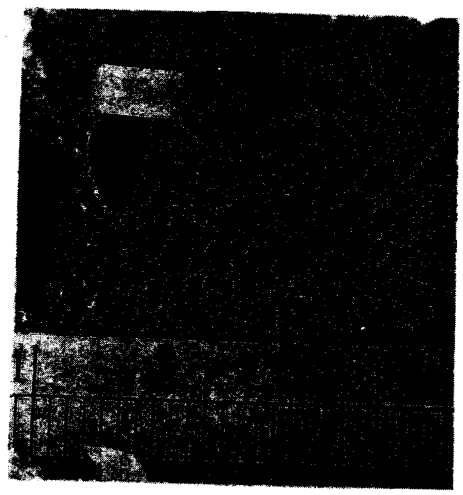

FIG.22

LIGHT WHEAT BRAN

FIG.23

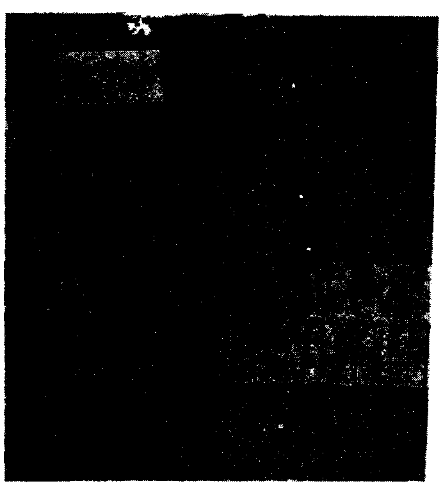

FIG.24

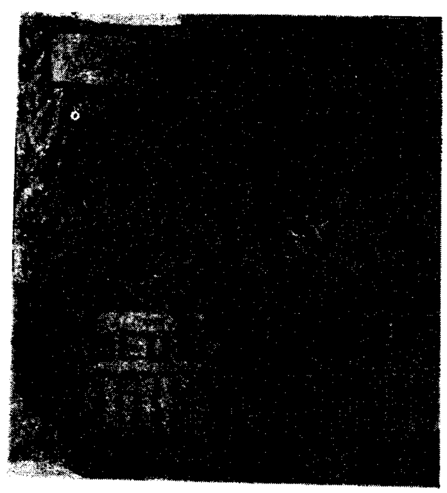

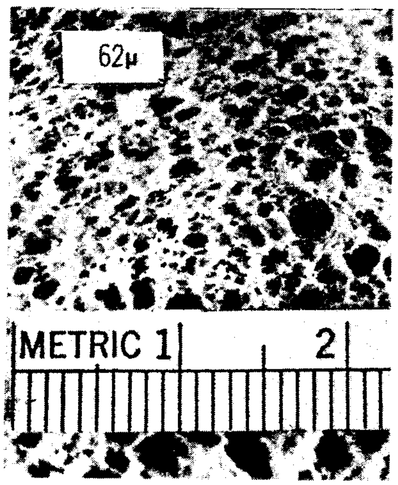


LIGHT WHEAT BRAN

FIG.25

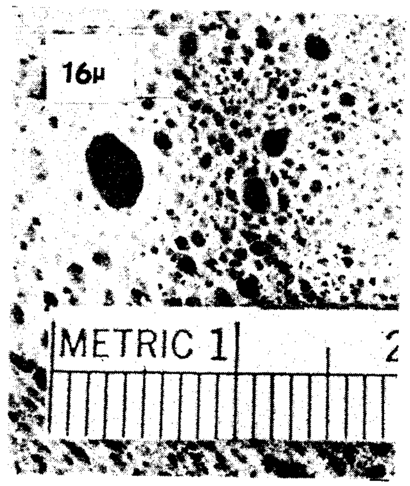


LIGHT WHEAT BRAN

FIG.26

FIG.27

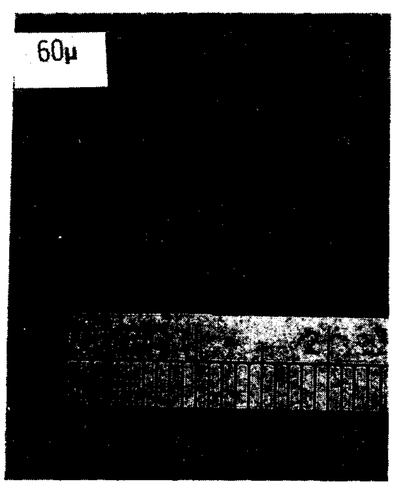


DRY CORN BRAN

FIG.28

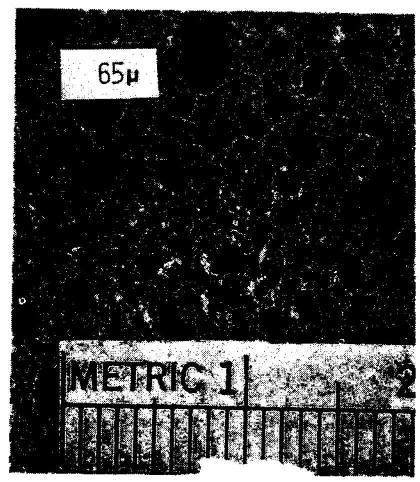


HEAVY WHEAT BRAN

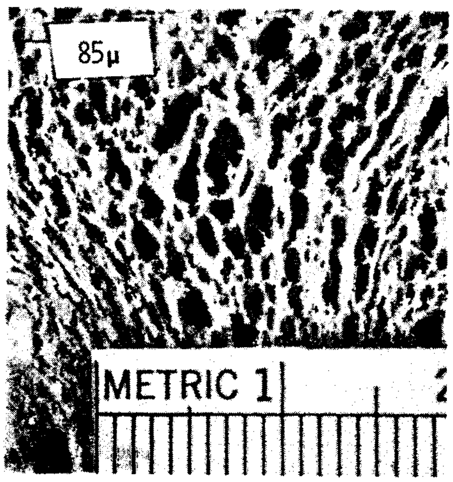


WET CORN BRAN

FIG.29

0117044

European Patent Office

# EUROPEAN SEARCH REPORT

Application number

EP 84 30 0209

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-2 345 806 (CELCOMMERZ)<br>* Page 3, paragraph 3; page 4, paragraph 4; page 7, paragraph 3 - page 8; claims 1, 4, 5 *<br>--- | 1-3,6-10,13 | A 23 L 1/10<br>A 23 L 1/34 |
| A | GB-A-2 000 426 (KELLOGG CO.)<br>* Page 2, lines 9-14; claims 1-6, 9, 10, 13, 15 *<br>--- | | |
| A | DE-A-2 446 872 (T. BUCK)<br>* Pages 2, page 4, 5 examples, claims 1,2 *<br>--- | | |
| D,A | US-A-4 350 714 (L.F. DUVALL)<br>* Abstract *<br>----- | | TECHNICAL FIELDS SEARCHED (Int. Cl. 3)<br>A 23 L 1/00 |

The present search report has been drawn up for all claims

| Place of search | Date of completion of the search | Examiner |
|---|---|---|
| BERLIN | 10-04-1984 | SCHULTZE D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document